Europäisches Patentamt

European Patent Office

Office européen des brevets

(11) Veröffentlichungsnummer: **0 239 733**
**A2**

## (12) EUROPÄISCHE PATENTANMELDUNG

(21) Anmeldenummer: **87101141.7**

(22) Anmeldetag: **28.01.87**

(51) Int. Cl.³: **H 02 G 1/08**

(30) Priorität: **01.03.86 DE 3606768**

(43) Veröffentlichungstag der Anmeldung:
**07.10.87 Patentblatt 87/41**

(84) Benannte Vertragsstaaten:
**AT BE CH ES FR GB GR IT LI LU NL SE**

(71) Anmelder: **REHAU AG + Co**
**Rheniumhaus**
**D-8673 Rehau(DE)**

(72) Erfinder:
**Der Erfinder hat auf seine Nennung verzichtet**

(54) Einrichtung zum Einziehen von Kabeln in Kabelschutzrohre.

(57) Die Erfindung betrifft eine Einrichtung zum nachträglichen Einziehen von Kabeln in bereits verlegte Kabelschutzrohre. Hierbei wird mit Druckluft ein Manschettenkolben als
Ziehvorrichtung durch das Kabelschutzrohr geschossen.
Erfindungsgemäß besteht der Druckluftanschluß aus der
Luftzuführung und einem zweigeteilten Formteil. Dieses
Formteil ist von außen druckdicht auf das Ende des
Kabelschutzrohres aufsetzbar. Der Manschettenkolben selbst
besteht aus einem starren, die Dichtmanschette tragenden
Vorderteil und einem mit einer Befestigungsöse versehenen
Endteil. Beide Teile des Manschettenkolbens sind durch ein
langgestrecktes, allseits flexibles Trägerseil miteinander verbunden.

EP 0 239 733 A2

## EINRICHTUNG ZUM EINZIEHEN VON KABELN IN KABELSCHUTZROHRE

Die Erfindung betrifft eine Einrichtung zum nachträglichen Einziehen von Kabeln in bereits verlegte Kabelschutzrohre, wobei mittels Druckluft ein Manschettenkolben als Ziehvorrichtung durch einen vorgegebenen Längenabschnitt des Kabelschutzrohres führbar ist.

Die Verlegung von Kabeln, beispielsweise für die Nachrichtenübertragung erfolgt nach dem Stand der Technik in bereits im Erdboden verlegte Kabelschutzrohre aus Kunststoff. In diese Kabelschutzrohre werden die Kabel eingezogen, wobei über spezielle Einzugsvorrichtungen Streckenabschnitte von mehreren hundert Metern überbrückt werden können.

Die bekannten Einzugsvorrichtungen bestehen aus mehreren Teilen, zu denen der Kabelkanalrohrstopfen, das Hilfsseil, der Manschettenkolben und das Druckluftanschlußstück gehören. Diese Vorrichtungsteile arbeiten derart zusammen, daß das Hilfsseil zunächst in den Kabelkanalrohrstopfen eingelegt wird. Danach wird der Manschettenkolben an das Hilfsseil angekoppelt und der Kabelkanalrohrstopfen in das Lumen eines Kabelschutzrohres eingeführt. Schließlich wird das Druckluftanschlußstück am Kabelkanalrohrstopfen angeschlossen und von einem Kompressor über einen Schlauch wird Druckluft in das Kabelschutzrohr hinter den Manschettenkolben eingeführt. Der Manschettenkolben wird dadurch mit großer Geschwindigkeit vorangetrieben, bis zum nächstgelegenen Anschlußpunkt. Dort wird das Hilfsseil an eine Zugvorrichtung angelenkt. An dem Hilfsseil wird das Zugseil der Seilwinde durch das Kabelschutzrohr gezogen. Danach wird über das Zugseil mittels der Seilwinde das Nachrichtenkabel in das Kabelschutzrohr eingebracht.

Blatt 2

Die geschilderten Maßnahmen sind bei einzeln verlegten Kabelschutzrohr-Strängen genau so anwendbar wie bei sogenannten
Mehrfachbelegungsrohren, bei denen beispielsweise verschiedene
Einzelrohre gleichen oder unterschiedlichen Durchmessers zu
einem Rohrbündel zusammengefaßt sind.

Das Hantieren mit der bekannten Einziehvorrichtung ist wegen
der Verwendung der verschiedenen Einzelelemente arbeitsaufwendig und damit kostenintensiv. Hier setzt die Erfindung ein,
die es sich zur Aufgabe gestellt hat, eine Einrichtung zum
Einziehen von Kabeln in bereits verlegte Kabelschutzrohre anzugeben, die den dazu erforderlichen Arbeitsaufwand auf ein
Minimum reduziert. Erfindungsgemäß wird dazu vorgeschlagen,
daß der Druckluftanschluß aus der Luftzuführung und einem
zweigeteilten Formteil besteht, welches von außen druckdicht
auf das Ende des Kabelschutzrohres aufsetzbar ist, und daß der
Manschettenkolben aus einem starren, die Dichtmanschette tragenden Vorderteil und einem mit einer Befestigungsöse versehenen Endteil besteht, wobei das Vorderteil und das Endteil
durch ein langgestrecktes, allseits flexibles Trägerseil miteinander verbunden ist.

Der besondere Vorteil der Erfindung wird darin gesehen, daß
das den Druckluftanschluß bildende Formteil zweigeteilt und
von außen auf das Kabelschutzrohr aufgesetzt ist. Dadurch
bleibt der Innendurchmesser des Kabelschutzrohres für das
Einschießen von Seilen oder Kabeln frei. Dies hat wiederum zur
Folge, daß nicht - wie beim bekannten Stand der Technik -
zuerst ein dünnes Hilfsseil durch das Kabelschutzrohr geschossen werden muß, um daran dann das Zugseil und danach das dikkere Kabel nachzuziehen, sondern mit der erfindungsgemäßen
Einrichtung kann aufgrund des schon beim Einschießen zur Verfügung stehenden gesamten Innendurchmessers des Kabelschutzrohres das Kabel gleich an der Befestigungsöse des Manschettenkolbens befestigt und von dem Befestigungskolben gezogen
durch das Kabelschutzrohr transportiert werden.

- 3 -

Blatt 3

Durch das zweigeteilte Formteil des Druckluftanschlusses ist es möglich, z.B. ein längeres Glasfaserkabel in einzelnen Abschnitten ohne Schnittunterbrechungen nacheinander in eine vorverlegte Gesamttrasse einzuschließen. Bei einer Versuchsverlegung ist es beispielsweise gelungen, ein Glasfaserkabel in Gesamtlänge von 3.000 m ohne Abschneiden und Kuppeln des Kabels in ein Kabelschutzrohr mit dem lichten Querschnitt 50 mm einzuschießen. Dies ist besonders vorteilhaft bei Glasfaserkabeln, denn Kupplungen bei solchen Kabeln verschlechtern die Qualität des durchgegebenen Nachrichtensignals deutlich, d.h. es kommt zu einer verstärkten Dämpfung des Nachrichtensignals. Mit dem zweigeteilten Formteil der Erfindung kann der Druckluftanschluß an jeder gewünschten Stelle des Kabelschutzrohres hergestellt werden, so daß das Glasfaserkabel ohne es zu zerschneiden von der Eingabestelle jeweils einen vorgegebenen Streckenabschnitt in das Kabelschutzrohr eingeschossen werden kann, danach wird der zweigeteilte Druckluftanschluß entfernt und erneut am Ende des ersten Streckenabschnittes angesetzt. Auf diese Weise kann das Glasfaserkabel in beliebiger Länge in eine vorverlegte Kabelschutzrohr-Trasse eingebracht werden, ohne es zu zerschneiden oder über eine Kupplung zu verbinden.

Gegenüber dem bekannten Stand der Technik, bei dem beispielsweise das Glasfaserkabel über eine Kabelziehwinde mechanisch in das Kabelschutzrohr eingebracht wird, hat die erfindungsgemäße Einziehvorrichtung noch den Vorteil, daß die Zugkraft über die Luftsäule der Pressluft und damit elastisch auf das empfindliche Glasfaserkabel aufgebracht wird. Es unterbleibt also die mechanische Kraftaufbringung auf das Glasfaserkabel über die Kabelziehwinde, die u.U. bei ruckweisem Vorziehen unzulässig hohe Zugkräfte auf das Kabel übertragen kann. Hiergegen sind gerade Glasfaserkabel sehr empfindlich. Moderne Kabelziehwinden, insbesondere zum Durchziehen von Glasfaserkabeln sind deswegen mit empfindlichen und teueren Meßgeräten im Kabelziehkopf ausgerüstet, über die der Meßwert an die Kabelziehwinde weitergeleitet wird.

Blatt 4

Bei Überschreitung des zulässigen Ziehwertes wird über diese
Meßgeräte die Kabelziehwinde abgeschaltet. Diese aufwendige
Technik wird durch das erfindungsgemäße Durchschießen des Kabels mittels Druckluft vermieden.

Der Manschettenkolben des erfindungsgemäßen Systems unterscheidet sich ebenfalls erheblich von dem beim Stand der Technik verwendeten. Während dort ein starrer Kolbenkern benutzt
wird, auf den die Dichtmanschetten aufgebracht sind, begnügt
sich die Kolbenausführung nach der Erfindung mit einem starren
Vorderteil, welches die Dichtmanschette trägt und dem mit der
Befestigungsöse versehenen Endteil. Beide Teile sind durch ein
langgestrecktes, allseits flexibles Trägerseil miteinander
verbunden. Dieses Trägerseil kann beispielsweise ein aus Metallfäden geflochtenes Seil sein, dessen Querschnitt den auftretenden Zugkräften entsprechen muß. Der Manschettenkolben
nach der Erfindung erhält durch diesen Aufbau eine gegenüber
dem Stand der Technik wesentlich erhöhte Flexibilität, die
noch dadurch unterstützt wird, daß das Endteil mit der Befestigungsöse in den Abmessungen erheblich kleiner sein kann als
die lichte Weite des zu durchfahrenden Kabelschutzrohres.

Vorteilhaft kann das Trägerseil über einen Teil oder die gesamte Länge seiner Ausdehnung von einem Pfropfen aus flexiblem
Schaumstoff umgeben sein, der in seinen Außenabmessungen im
wesentlichen dem Durchmesser der Dichtmanschette entsprechen
sollte. Dieser Pfropfen aus flexiblem Schaumstoff kann beispielsweise mit Schmiermittel getränkt sein, welches während
des Einschießprozesses an die Innenwand des Kabelschutzrohres
abgegeben wird. Auf diese Weise wird beim Einschießvorgang
Schmiermittel an die Rohrwandungen übertragen, welches das
Einziehen des Kabels zusätzlich erleichtert.

Die erfindungsgemäße Einrichtung zum nachträglichen Einziehen
von Kabeln in bereits verlegte Kabelschutzrohre ist in der
Zeichnung schematisch dargestellt. Die Einrichtung besteht im

- 5 -

Blatt 5

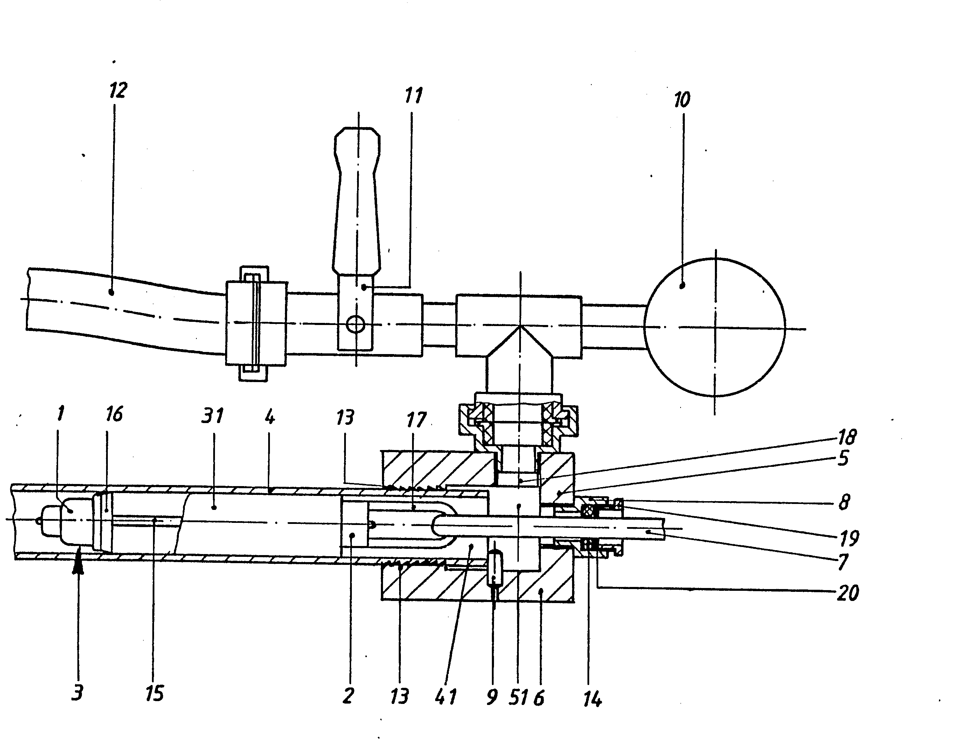

wesentlichen aus dem Manschettenkolben 3 und dem zweigeteilten
Formteil 5, 6. Der Manschettenkolben 3 besitzt das starre Vorderteil 1, an welches die Dichtmanschette 16 angelenkt ist.
Das Vorderteil 1 ist über das flexible Trägerseil 15 - im
Teilschnitt ersichtlich - mit dem Endteil 2 verbunden. An das
Endteil 2 ist die Befestigungsöse angeformt, in welcher das
Kabel 7 befestigt ist. Die Darstellung zeigt den geschilderten
Aufbau in dem in das Lumen 41 des Kabelschutzrohres 4 eingesetzten Zustand. In die Formteilhälfte 5 ist die Druckluftleitung 12 eingeführt, welche mit einem in der Zeichnung nicht
gezeigten Kompressor für die zum Einschießen des Manschettenkolbens 3 erforderliche Preßluft verbunden ist. Über das Regelventil 11 wird der zum Einschießen notwendige Druck der
Preßluft geregelt und über die Anzeige auf dem Manometer 10
überwacht. Die Druckluft gelangt durch die Druckluftleitung 12
und den Eintrittsquerschnitt 18 in den lichten Innenraum 51
des zweigeteilten Formteils 5, 6, in welchen das Ende des Kabelschutzrohres 4 hineinragt. Dieser lichte Innenraum 51 ist
zum Kabelschutzrohr 4 durch die Verzahnung 13 abgedichtet, wobei selbstverständlich auch andere Abdichtungsmaßnahmen, z.B.
Ringdichtungen, Dichtmanschetten, verwendet werden können. In
der gezeigten Ausführungsform dringt die Verzahnung 13 durch
Anwendung von Preßdruck in die Oberfläche des Kabelschutzrohres 4 in Form einer Ringverpressung ein und schafft somit eine
mehrfache Ringabdichtung. Der Preßdruck wird durch in der
Zeichnung nicht dargestellte Schrauben aufgebracht, mit denen
die beiden Formteilhälften 5, 6 zusammengepreßt und auf der
Oberfläche des Kabelschutzrohres dichtend festgelegt werden.

In den Innenraum 51 zwischen den Formteilhälften 5, 6 ragt von
unten her eine Einschubbegrenzung 9, welche als Anschlag für
das Kabelschutzrohr 4 dient.

Die Abdichtung der Formteilhälften 5, 6 zum Kabel 7 erfolgt
durch eine Kabelverschraubung 8 nach dem Stand der Technik,
die mit einem Gummidichtring 14 ausgerüstet ist. Die Dichtkraft auf dem Gummidichtring 14 wird über eine Einschraubhülse
19 und eine Metallscheibe 20 erzeugt.

Blatt 6

Mit der Kabelverschraubung 8 wird verhindert, daß die in den lichten Innenraum 51 eingeführte Preßluft entlang des Kabels 7 nach außen entweichen kann. Die Preßluft strömt vielmehr in das Lumen 41 des Kabelschutzrohres 4 ein und bewegt den Manschettenkolben 3 in Längsrichtung des Kabelschutzrohres 4 bis zum Endpunkt der Strecke, auf der das Kabelschutzrohr 4 verlegt ist. Über die Befestigungsöse 17 wird dabei die Zugkraft auf das Kabel 7 mit Hilfe der Preßluftsäule weich und ruckfrei übertragen.

Die gezeigte Darstellung zeigt neben den geschilderten Einzelheiten auch den Pfropfen 31 aus flexiblem Schaumstoff, welcher auf das Trägerseil 15 des Manschettenkolbens 3 aufgebracht ist.

- PATENTANSPRÜCHE -

PATENTANSPRÜCHE

1. Einrichtung zum nachträglichen Einziehen von Kabeln in bereits verlegte Kabelschutzrohre, wobei mittels Druckluft ein Manschettenkolben als Ziehvorrichtung durch einen vorgegebenen Längenabschnitt des Kabelschutzrohres führbar ist, dadurch gekennzeichnet, daß der Druckluftanschluß aus der Luftzuführung (12) und einem zweigeteilten Formteil (5, 6) besteht, welches von außen druckdicht auf das Ende des Kabelschutzrohres (4) aufsetzbar ist, und daß der Manschettenkolben (3) aus einem starren, die Dichtmanschette (16) tragenden Vorderteil (1) und einem mit einer Befestigungsöse (17) versehenen Endteil (2) besteht, welche durch ein langgestrecktes, allseits flexibles Trägerseil (15) miteinander verbunden sind.

2. Einrichtung nach Ansprüchen 1, dadurch gekennzeichnet, daß das Trägerseil (15) von einem Pfropfen (31) aus flexiblem Schaumstoff umgeben ist, welcher in seinen Außenabmessungen im wesentlichen dem Durchmesser der Dichtmanschette (16) entspricht.